# FASCICULE DE BREVET EUROPEEN

(11) **EP 2 406 065 B1**
(45) Date de publication et mention de la délivrance du brevet: **31.07.2013**
(21) Numéro de dépôt: 10707525.1
(22) Date de dépôt: 08.03.2010
(51) Int. Cl.: B29D 30/52, B29D 30/68, B26D 1/00, B26D 7/10, B26F 1/20

(54) **PROCEDE ET DISPOSITIF DE REALISATION D'ENTAILLES NON DEBOUCHANTES DANS UNE BANDE DE ROULEMENT NON VULCANISEE**
VERFAHREN UND VORRICHTUNG ZUR HERSTELLUNG VON EINSCHNITTEN IN EINER UNVULKANISIERTEN LAUFFLÄCHE
METHOD AND DEVICE FOR MAKING SIPES IN AN UNVULCANISED TREAD

(30) Priorité: 11.03.2009 FR 0951516
(43) Date de publication de la demande: 18.01.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: PALLOT, Patrick, F-63100 Clermont-Ferrand (FR); CROSNIER, Gérard, F-63122 Ceyrat (FR); ABINAL, Richard, F-63960 Veyre-Monton (FR)
(74) Mandataire: Reynaud, Georges
(86) Numéro de dépôt international: PCT/EP2010/052899
(87) Numéro de publication internationale: WO 2010/102975

(56) Documents cités:
- DE-A1- 19 654 408
- DE-A1-102005 061 092
- DE-A1-102006 038 742
- FR-A- 2 728 498
- US-A- 2 232 488
- US-A- 3 491 651
- US-A- 4 080 230
- US-A- 5 265 506
- US-A- 5 642 646

## Description

Le domaine de l'invention concerne la fabrication des pneumatiques, et plus particulièrement la réalisation des bandes de roulements.

De manière connue, les bandes de roulements pour pneumatiques comportent des motifs sculptés sur leur surface radialement externe, dans le but d'améliorer la tenue des pneumatiques sur des sols de natures différentes. Ainsi, de manière générale, la sculpture présente des sillons orientés dans la direction circonférentielle, des sillons transversaux, et des pains de sculptures comportant des entailles. Ces entailles ont, entre autre, pour but de favoriser l'adhérence du pneumatique sur sol mouillé.

Le réseau d'entailles est obtenu en disposant un réseau de lamelles correspondant dans le moule de cuisson. Ces entailles d'une profondeur donnée, dites externes ou débouchantes, sont réalisées pendant l'opération de moulage, et s'étendent radialement depuis la surface radialement externe de la bande de roulement vers l'intérieur de la bande de roulement.

On observe néanmoins, que l'efficacité des entailles externes décroît au fur et à mesure de l'usure des pains du pneumatique, en raison de la diminution relative de la profondeur desdites entailles externes.

Aussi, il a été proposé de réaliser des entailles s'étendant radialement sur une hauteur donnée depuis la face radialement interne de la bande de roulement et disposées au drit des pains de gomme. La hauteur de ces entailles internes est déterminée de sorte que lesdites entailles internes ou non débouchantes ne communiquant pas avec la face radialement externe de la bande de roulement lorsque le pneumatique n'est pas usé. Lorsque les pains ont atteint un certain degré d'usure, les entailles externes apparaissent à la surface de la bande de roulement de manière à conférer au pneumatique un surcroît d'adhérence jusqu'à l'usure totale de la bande de roulement.

À titre d'exemple, la publication EP 335 694, décrit une bande de roulement comportant des entailles internes pratiquées radialement depuis la surface interne de la bande de roulement.

La réalisation de ces entailles internes fait l'objet de nombreuses publications.

La publication JP 11 147 403 propose de disposer des inserts réalisés dans un matériau ayant une résistance à l'usure inférieure à celle de la bande de roulements qui, après l'usure partielle débouche sur la surface radialement externe de la bande de roulement.

La publication la publication JP 04 113 905 propose de réaliser les entailles internes dans une bande de roulement précuite. La bande de roulement ainsi modifiée, est ensuite déposée sur la surface radialement externe du pneumatique, généralement après une opération de rechapage.

La publication DE 10 2006 036 509 décrit une méthode dans laquelle les entailles internes sont réalisées sur une bande de roulement non vulcanisée. Un matériau anticollant est introduit dans les entailles de manière à éviter la fermeture des dites entailles pendant l'opération de vulcanisation.
Les brevets US 4,080,230 et US 2,232,488 décrivent deux procédés de fabrication des enfailles dans les bandes de roulements avec des lames chauffées.

Ainsi, les problèmes qui se posent lorsque l'on désire réaliser des entailles internes sur une bande de roulement non vulcanisée, et déposer cette dernière sur l'ébauche de pneumatique au cours de la phase finale d'assemblage, sont de deux ordres. Un premier problème consiste, comme on l'a vu ci-dessus, à éviter que les faces des entailles ne se ressoudent entre elles lors de la vulcanisation du pneumatique. Le deuxième problème réside dans le positionnement des entailles internes, de sorte qu'elles soient disposées au droit des pains de la sculpture. On évite en effet que les entailles internes débouchent à la hauteur des fonds de sillons circonférentiels ou transversaux.

L'invention a pour but de fournir une solution à ces deux problèmes.

Selon l'invention, le procédé de fabrication d'un pneumatique comportant une bande de roulement dans laquelle des entailles radiales non débouchantes sont disposées dans les pains de gomme formant la sculpture, comprend une étape au cours de laquelle on réalise lesdites entailles dans la bande de roulement non vulcanisée destinée à coiffer l'ébauche dudit pneumatique.

Cette étape se caractérise en ce qu'on fait pénétrer pendant un temps suffisant dans la face radialement interne de ladite bande de roulement une ou plusieurs lames portées à une température supérieure à la température de vulcanisation du matériau constituant ladite bande de roulement, de manière à vulcaniser superficiellement les parois de l'entaille en contact avec ladite lame (22) afin d'empêcher le recollage des faces l'une contre l'autre une fois la lame retirée de l'entaille

En ajustant de manière adéquate la température des lames et le temps de pénétration de la lame dans l'entaille on s'assure que les deux faces de chacune des entailles internes subissent une vulcanisation superficielle empêchant le recollage des faces l'une contre l'autre.

On observe alors que, au cours de l'étape de vulcanisation et de moulage de la bande de roulement, les entailles placées au droit des pains de la sculpture présentent des faces qui ne se ressoudent pas, et que les entailles placées au droit d'un sillon ou d'une entaille externe disparaissent.

Ce phénomène provient du fait que les zones de la bande de roulement placées au droit des sillons ou des lamelles destinées à réaliser les entailles externes sont des zones dans lesquelles le matériau est soumis à des mouvements importants lors de la phase de moulage. Il en résulte une dislocation des faces de l'entaille, ayant pour conséquence une reformation des liaisons caoutchoutiques pendant la vulcanisation.

En revanche, les entailles placées au droit des pains ne connaissent pas ces perturbations, ce qui permet de réaliser un pneumatique comportant des entailles internes dont les faces ne sont pas vulcanisées, et qui s'étendent radialement depuis la semelle de la bande de roulement vers la surface radialement externe du pneumatique, sans affleurer au niveau de la dite surface radialement externe.

On observera que le choix de la température des lames chauffantes et du temps de pénétration des dites lames chauffantes dans la bande de roulement sont déterminants dans la révélation du phénomène décrit ci-dessus. Il convient en effet que la pré vulcanisation des faces de l'entaille soit essentiellement superficielle et n'affecte pas les couches de matière éloignées des dites faces de l'entaille.

L'invention a également pour but de proposer un dispositif apte à mettre en oeuvre le procédé selon l'invention.

Les dispositifs permettant de réaliser des entailles dans une bande continue sont largement connus et comprennent en règle générale un premier moyen comportant une première surface destinée à supporter la face radialement externe de la bande de roulement, et un deuxième moyen comportant une deuxième surface destinée à venir en contact avec la face radialement interne de la bande de roulement, et sur laquelle est disposé un réseau de lames placées en vis-à-vis de la première surface et destinées à pénétrer dans ladite bande de roulement. La première et la deuxième surface sont aptes à coopérer de sorte que, lorsque le dispositif est en fonctionnement, les lames pénètrent dans la bande de roulement.

De manière connue ces dispositifs comportent des moyens permettant de chauffer les lames de manière à en améliorer la pénétration dans le matériau caoutchoutique formant la bande de roulement. Ces moyens sont formés en règle générale de résistances électriques mises en contact avec la base des lames.

Toutefois, il convient d'éviter que les dispositifs de chauffage perturbent interfèrent de manière non désirée avec les autres parties de la bande de roulement. En particulier, il convient de faire en sorte que la deuxième surface en contact avec la semelle de la bande de roulement ne soit pas portée à une température susceptible d'entraîner la vulcanisation de ladite semelle. On observe que les moyens traditionnels ont aussi pour effet de porter la deuxième surface à une température excessive.

L'objet de l'invention est d'apporter une solution à ce deuxième problème.

A cet effet le dispositif de réalisation d'entailles selon l'invention comprend des lames réalisées dans un matériau ayant des propriétés ferromagnétiques et un dispositif à induction dont l'action s'exerce sur les seules lames pénétrant dans les entailles.

Il en résulte que l'apport de calories peut être contrôlé de manière précise en ajustant la précision des inducteurs, mais également que les lames places en dehors du champ de l'inducteur se refroidissent.

En choisissant de manière appropriée le matériau formant le deuxième moyen, tel qu'un matériau non magnétique faiblement conducteur de la chaleur on évite une montée en température de la deuxième surface.

De plus lorsque la deuxième surface est de forme cylindrique seule une portion de la circonférence de la deuxième surface est en contact avec la semelle de la bande de roulement. Il suffit alors de concevoir un inducteur agissant sur cette seule portion pour ne porter en température que les seules lames ayant pénétré dans la bande de roulement. Les lames situées sur la portion circonférentielle complémentaire ne sont plus soumises à l'action de l'inducteur et peuvent donc refroidir.

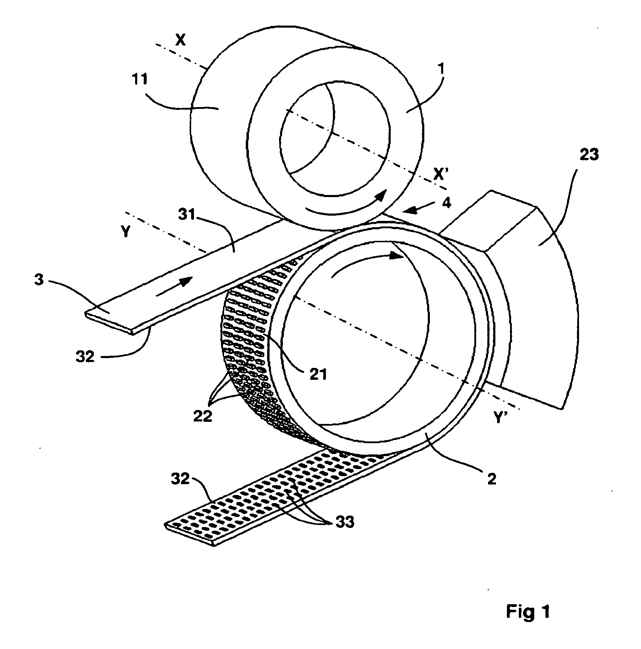

La description qui suit s'appuie sur un mode préférentiel de réalisation de l'invention, et sur la figure 1. Toutefois, comme on le verra par la suite de nombreuses formes d'exécution équivalente permettent également de mettre en oeuvre les principes généraux de l'invention tels que décrits ci-dessus.

Le dispositif selon l'invention représenté à la figure 1 comprend un premier moyen 1 de forme générale cylindrique en rotation autour d'un axe XX'.

Le deuxième moyen 2, est également formé d'un cylindre en rotation autour de son axe YY'.

Les surfaces radialement externes de chacun des cylindres forment respectivement la première surface 11 et la deuxième surface 21. La deuxième surface 21 comprend un réseau de lames 22 s'étendant sensiblement dans la direction radiale. Les vitesses circonférentielles du cylindre 1 et du cylindre 2 sont identiques et de directions opposées. La première et la deuxième surface forment un entre fer 4 dans lequel, lorsque le dispositif est en fonctionnement, circule une bande de roulement 3.

Selon cette forme préférentielle de réalisation de l'invention, le moyen de chauffage 23 est formé par un ensemble de bobines à induction disposées au droit d'une portion de la circonférence du cylindre 2, et placé en aval de l'entrefer 4. Les lames sont réalisées dans un matériau ferromagnétique. En revanche, le matériau formant le corps du cylindre 2 et la deuxième surface 21, n'a pas de propriété ferromagnétique et sera de préférence faiblement conducteur de la chaleur.

Au niveau de l'entre fer 4, La face radialement externe 31 de la bande de roulement est en contact avec la première surface 11, et la face radialement interne 32 de la bande de roulement est en contact avec la deuxième surface 21. Il en résulte une pénétration des lames 22 dans la face radialement interne 32 de la bande de roulement 3.

On s'arrange alors pour maintenir en contact la bande de roulement avec la deuxième face 21 sur une partie de la circonférence du cylindre 2 en aval de l'entrefer 4. A cet effet il est prévu des moyens d'embarrage (non représentés) permettant de guider la bande de roulement en amont et en aval du dispositif selon l'invention.

En ajustant la vitesse circonférentielle du cylindre 2 et la longueur de la portion de circonférence sur laquelle on maintient les lames 22 enfoncées dans la bande de roulement, on détermine le temps de contact entre les lames 22 et les faces des entailles 33 directement en contact avec lesdites lames.

Les lames 22 sont portées à une température supérieure à la température de vulcanisation du matériau formant la bande de roulement 3 et comprise sensiblement entre 170 °C et 250 °C. Une température trop faible des lames entraînerait un temps de mise en contact important. À l'inverse, une température trop élevée peut conduire à la destruction du matériau et à une vulcanisation avancée des faces de l'entaille en contact avec lesdites lames, préjudiciable, comme cela a été exposé ci-dessus, à la recomposition du mélange au droit des cordons et des lamelles destinés à mouler respectivement les sillons et les entailles externes de la bande de roulement.

À titre expérimental, pour une bande de roulement destinée à équiper un véhicule de tourisme, de bons résultats ont été obtenu avec un dispositif comprenant un deuxième moyen formé d'un rouleau 2 d'un diamètre de 1,5 m, mis en rotation à une vitesse circonférentielle de 3 m/minute, et comportant des lames portées à une température de 220°C. Dans cette configuration lorsque la bande de roulement est embarrée sur la moitié de la circonférence du rouleau cylindrique 2, les lames restent en contact des faces de l'entaille pendant un temps de l'ordre de 30 secondes.

Lorsque la température des lames est réduite à 180°C, il a été nécessaire de réduire la vitesse circonférentielle du rouleau 2 à 0,4 m/minute. Les lames restent alors au contact des faces de l'entaille pendant un temps de 3 minutes.

En pratique, le temps de pénétration des lames est compris entre 0,3 min et 5 minutes et d'autant plus court que la température est élevée.

La forme de réalisation de l'invention telle que décrite ci-dessus peut faire l'objet d'un grand nombre de variantes donnant des résultats équivalents.

Ainsi, le deuxième moyen peut prendre la forme d'un tapis de transfert circulant entre deux rouleaux. Dans cette forme d'exécution le premier moyen peut avoir la forme d'un rouleau cylindrique tel que décrit précédemment, ou d'un tapis de transfert faisant face au tapis de transfert formant le deuxième moyen.

Une autre forme d'exécution nécessitant un grand nombre d'inducteurs consiste à disposer un tronçon de bande de roulement sur une deuxième surface fixe comportant un réseau de lames. L'incrustation des lames dans la face radialement interne de la bande de roulement se faisant à l'aide d'un premier moyen tel qu'un rouleau.

## Revendications

1. Procédé de fabrication d'un pneumatique comportant une bande de roulement dans laquelle des entailles radiales non débouchantes sont disposées dans les pains de gomme formant la sculpture, comprenant une étape au cours de laquelle on réalise lesdites entailles (33) dans la bande de roulement (3) non vulcanisée destinée à coiffer l'ébauche dudit pneumatique, cette étape étant **caractérisée en ce qu'**on fait pénétrer pendant un temps suffisant dans la face radialement interne (32) de ladite bande de roulement (3) une ou plusieurs lames (22) portées à une température supérieure à la température de vulcanisation du matériau constituant ladite bande de roulement (3), de manière à vulcaniser superficiellement les parois de l'entaille en contact avec ladite lame (22) afin d'empêcher le recollage des faces l'une contre l'autre une fois la lame retirée de l'entaille.

2. Procédé selon la revendication 1, dans lequel la température des lames chauffante (22) est comprise entre 170°C et 250 °C.

3. Procédé selon la revendication 2, dans lequel le temps de pénétration des lames dans la bande de roulement non vulcanisée est compris entre 0,3 minutes et 5 minutes.

4. Procédé selon l'une des revendications 1 à 3, dans lequel on fait pénétrer lesdites lames chauffantes (22) dans la bande de roulement non vulcanisée (3) selon une direction sensiblement radiale.

5. Procédé selon la revendication 4, dans lequel les lames (22) pénètrent dans la bande de (3) roulement sur une hauteur inférieure à l'épaisseur totale de ladite bande de roulement non vulcanisée.

6. Procédé selon l'une des revendications 1 à 5, dans lequel l'ébauche de pneumatique est vulcanisée dans une presse de cuisson.

7. Dispositif de réalisation d'entailles internes (32) dans une bande de roulement non vulcanisée comprenant un premier moyen (1) comportant une première surface (11) destinée à supporter la face radialement externe (31) de la bande de roulement (3) , et un deuxième moyen (2) comportant une deuxième surface (21) destinée à venir en contact avec la face radialement interne (32) de la bande de roulement (3) et sur laquelle est disposé un réseau de lames (22) placées en vis-à-vis de la première surface (11) et destinées à pénétrer dans ladite bande de roulement (3), la première (11) et la deuxième surface (21) étant aptes à coopérer de sorte que, lorsque le dispositif est en fonctionnement, les lames (22) pénètrent dans la face radialement interne (32) de la bande de roulement, **caractérisé en ce que** les lames (22) sont réalisées dans un matériau ayant des propriétés ferromagnétiques et sont portées à une température donnée par un dispositif à induction (23).

8. Dispositif selon la revendication 7, dans lequel les lames (22) sont disposées sensiblement perpendiculairement à la deuxième surface (21)

9. Dispositif selon l'une des revendications 7 ou 8, dans lequel les lames (22) sont réalisées dans un matériau fortement conducteur de la chaleur.

10. Dispositif selon l'une des revendications 7 à 9, dans lequel la deuxième face (21) du deuxième moyen (2) est constituée d'un matériau non magnétique et faiblement conducteur de la chaleur.

11. Dispositif selon la revendication 7, dans lequel le premier (1) et le deuxième (2) moyen sont formés par des rouleaux cylindriques d'axes parallèles, entre lesquels circule ladite bande de roulement (3).

12. Dispositif selon la revendication 11, dans lequel le dispositif à induction est disposé sur une partie de la circonférence du rouleau cylindrique formant le deuxième moyen.

13. Dispositif selon la revendication 12, dans lequel des moyens sont prévus pour permettre à la bande de roulement (3) de rester en contact avec la deuxième surface (21) du cylindre formant le deuxième moyen (2) sur une portion donnée de la circonférence dudit rouleau cylindrique (2) formant le deuxième moyen.

## Patentansprüche

1. Verfahren zur Herstellung eines Reifens, der eine Lauffläche umfasst, in der radiale Blindkerben in den Profilstollen, die das Profil bilden, angeordnet sind, wobei das Verfahren einen Schritt umfasst, in dem die Kerben (33) in der unvulkanisierten Lauffläche (3) hergestellt werden, die den Rohling des Reifens bedecken soll, wobei der Schritt **dadurch gekennzeichnet ist, dass** während eines ausreichenden Zeitraums eine oder mehrere Schneiden (22), die auf eine Temperatur über der Vulkanisationstemperatur des Materials, aus dem die Lauffläche (3) besteht, gebracht wurde bzw. wurden, in die radiale Innenfläche (32) der Lauffläche (3) eindringen gelassen werden, so dass die Wände der Kerbe in Kontakt mit der Schneide (22) oberflächlich vulkanisiert werden, um das erneute Zusammenkleben von Flächen zu verhindern, sobald die Schneide aus der Kerbe zurückgezogen wurde.

2. Verfahren nach Anspruch 1, wobei die Temperatur der erhitzten Schneiden (22) zwischen 170 °C und 250 °C liegt.

3. Verfahren nach Anspruch 2, wobei der Zeitraum des Eindringens der Schneiden in die unvulkanisierte Lauffläche zwischen 0,3 Minuten und 5 Minuten liegt.

4. Verfahren nach einem der Ansprüche 1 bis 3, wobei die erhitzten Schneiden (22) gemäß einer im Wesentlichen radialen Richtung in die unvulkanisierte Lauffläche (3) eindringen gelassen werden.

5. Verfahren nach Anspruch 4, wobei die Schneiden (22) in die Lauffläche (3) in einer Höhe eindringen, die geringer als die Gesamtdicke der unvulkanisierten Lauffläche ist.

6. Verfahren nach einem der Ansprüche 1 bis 5, wobei der Reifenrohling in einer Heizpresse vulkanisiert wird.

7. Vorrichtung zur Herstellung von Innenkerben (32) in einer unvulkanisierten Lauffläche, wobei die Vorrichtung ein erstes Mittel (1), das eine erste Oberfläche (11) umfasst, die die radiale Außenfläche (31) der Lauffläche (3) tragen soll, und ein zweites Mittel (2) umfasst, das eine zweite Oberfläche (21) umfasst, die mit der radialen Innenfläche (32) der Lauffläche (3) in Kontakt kommen soll und auf der ein Netz von Schneiden (22) angeordnet ist, die gegenüber der ersten Oberfläche (11) platziert sind und in die Lauffläche (3) eindringen sollen, wobei die erste (11) und die zweite Oberfläche (21) dazu fähig sind, derart zusammenzuwirken, dass, wenn die Vorrichtung im Betrieb ist, die Schneiden (22) in die radiale Innenfläche (32) der Lauffläche eindringen, **dadurch gekennzeichnet, dass** die Schneiden (22) aus einem Material mit ferromagnetischen Eigenschaften hergestellt sind und von einer Induktionsvorrichtung (23) auf eine gegebene Temperatur gebracht werden.

8. Vorrichtung nach Anspruch 7, wobei die Schneiden (22) im Wesentlichen senkrecht zu der zweiten Oberfläche (21) angeordnet sind.

9. Vorrichtung nach einem der Ansprüche 7 oder 8, wobei die Schneiden (22) aus einem Material hergestellt sind, das ein starker Wärmeleiter ist.

10. Vorrichtung nach einem der Ansprüche 7 bis 9, wobei die zweite Fläche (21) des zweiten Mittels (2) aus einem Material besteht, das nicht magnetisch und ein schwacher Wärmeleiter ist.

11. Vorrichtung nach Anspruch 7, wobei das erste (1) und das zweite (2) Mittel von zylindrischen Walzen mit parallelen Achsen gebildet werden, zwischen denen die Lauffläche (3) sich bewegt.

12. Vorrichtung nach Anspruch 11, wobei die Induktionsvorrichtung auf einem Teil des Umfangs der zylindrischen Walze, die das zweite Mittel bildet, angeordnet ist.

13. Vorrichtung nach Anspruch 12, wobei Mittel vorgesehen sind, um zu ermöglichen, dass die Lauffläche (3) mit der zweiten Oberfläche (21) des Zylinders, der das zweite Mittel (2) bildet, über einen gegebenen Teil des Umfangs der zylindrischen Walze (2), die das zweite Mittel bildet, in Kontakt bleibt.

## Claims

1. Method of manufacturing a tyre comprising a tread strip in which blind radial cuts are arranged in the blocks of rubber that form the tread pattern, comprising a step during which the said cuts (33) are made in the unvulcanized tread strip (3) intended to cap the said green tyre, this step being **characterized in that** one or more blades (22) raised to a temperature higher than the vulcanization temperature of the material of which the said tread strip (3) is made are caused to penetrate the radially internal face (32) of the said tread strip (3) for a sufficient period of time that they superficially vulcanize the walls of the cut in contact with the said blade (22) so as to prevent the faces from sticking back together once the blade has been withdrawn from the cut.

2. Method according to Claim 1, in which the temperature of the heating blades (22) is comprised between 170°C and 250°C.

3. Method according to Claim 2, in which the time during which the blades penetrate the unvulcanized tread strip is comprised between 0.3 minutes and 5 minutes.

4. Method according to one of Claims 1 to 3, in which the said heating blades (22) are made to penetrate the unvulcanized tread strip (3) in a substantially radial direction.

5. Method according to Claim 4, in which the blades (22) penetrate the tread strip (3) over a depth less than the total thickness of the said unvulcanized tread strip.

6. Method according to one of Claims 1 to 5, in which the green tyre is vulcanized in a curing press.

7. Device for making internal cuts (32) in an unvulcanized tread strip, comprising a first means (1) having a first surface (11) intended to support the radially outer face (31) of the tread strip (3), and a second means (2) having a second surface (21) intended to come into contact with the radially internal face (32) of the tread strip (3) and on which there is arranged an array of blades (22) positioned facing the first surface (11) and intended to penetrate the said tread strip (3), the first (11) and the second (21) surface being able to collaborate in such a way that, when the device is in operation, the blades (22) penetrate the radially internal face (32) of the tread strip, **characterized in that** the blades (22) are made of a material that has ferromagnetic properties and are raised to a given temperature by an induction device (23).

8. Device according to Claim 7, in which the blades (22) are arranged substantially perpendicular to the second surface (21).

9. Device according to either of Claims 7 or 8, in which the blades (22) are made of a highly heat-conductive material.

10. Device according to one of Claims 7 to 9, in which the second face (21) of the second means (2) is made of a material that is non-magnetic and a weak conductor of heat.

11. Device according to Claim 7, in which the first (1) and the second (2) means are formed of cylindrical rollers with parallel axes, between which the said tread strip (3) passes.

12. Device according to Claim 11, in which the induction device is arranged on part of the circumference of the cylindrical roller that forms the second means.

13. Device according to Claim 12, in which means are provided for allowing the tread strip (3) to remain in contact with the second surface (21) of the cylinder that forms the second means (2), over a given portion of the circumference of the said cylindrical roller (2) that forms the second means.
